# EUROPEAN PATENT SPECIFICATION

(11) **EP 0 553 422 B1**
(45) Date of publication and mention of the grant of the patent: **21.02.1996**
(21) Application number: 92120009.3
(22) Date of filing: 25.11.1992
(51) Int. Cl.: B66B 1/34, G01G 19/18

(54) **Load measuring apparatus for an elevator car**
Lastmessanordnung für eine Aufzugskabine
Appareil de mesure de charge pour une cabine d'ascenseur

(30) Priority: 30.01.1992 US 828103
(43) Date of publication of application: 04.08.1993
(73) Proprietor: INVENTIO AG, CH-6052 Hergiswil NW (CH)
(72) Inventor: Pearson, David B., Raritan, New Jersey 08869 (US)

(56) References cited:
- EP-A- 0 003 685
- GB-A- 2 236 301
- US-A- 3 536 163

## Description

Die Erfindung betrifft eine Lastmesseinrichtung für eine Aufzugskabine, die von einem an Tragseilen aufgehängten Tragrahmen getragen wird, der aus einem einen Bodenrahmen tragenden unteren Joch, aus vertikal verlaufenden Trägern und aus einem mit den Tragseilen in Verbindung stehenden oberen Joch besteht.

Aus der Patentschrift EP-B1 0 151 949 ist eine Aufzugskabine mit einem Kabinenboden bekannt, der an je einer Ecke von einem horizontal verlaufenden Schenkel eines Winkels getragen wird. Die vertikal verlaufenden Schenkel der Winkel sind mit einem Bodenrahmen verschraubt. Die auf die horizontal verlaufenden Schenkel einwirkenden Kräfte werden mittels am Schenkel angeordneten Dehnungsmessstreifen in elektrische Signale umgewandelt, die wiederum von einer Verstärkerschaltung weiterverarbeitet werden.

Ein Nachteil der bekannten Einrichtung liegt darin, dass die im Bodenbereich angeordnete Lastmesseinrichtung eine mechanisch aufwendige Ausgestaltung des Kabinenbodens und des Bodenrahmens notwendig macht. Zudem muss der Kabinenboden auf besonders ausgebildeten an den horizontal verlaufenden Schenkeln angeordneten Isolierelementen abgestützt werden.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und eine Lastmesseinrichtung so auszubilden, dass die Aufzugskabine direkt auf den Bodenrahmen aufgesetzt werden kann.

Die durch die Erfindung erreichten Vorteile sind im wesentlichen darin zu sehen, dass Kabine und Bodenrahmen für Anwendungen mit Lastmesseinrichtung mechanisch gleich aufgebaut sind wie für Anwendungen ohne Lastmesseinrichtung. Ein weiterer Vorteil besteht darin, dass ein nachträglicher Einbau einer Lastmesseinrichtung ohne mechanische Änderungen an Kabine und Bodenrahmen möglich ist.

Im folgenden wird die Erfindung anhand von lediglich einen Ausführungsweg darstellenden Zeichnungen näher erläutert. Es zeigen:
- Fig. 1: eine von einem Tragrahmen getragene Aufzugskabine mit einer erfindungsgemässen Lastmesseinrichtung,
- Fig. 2: Einzelheiten der aus einem Näherungssensor und einer Platte bestehenden Lastmesseinrichtung,
- Fig. 3: eine Ausgangsstufe des Näherungsschalters und
- Fig. 4: ein Diagramm zur Erläuterung der Wirkungsweise der Lastmesseinrichtung.

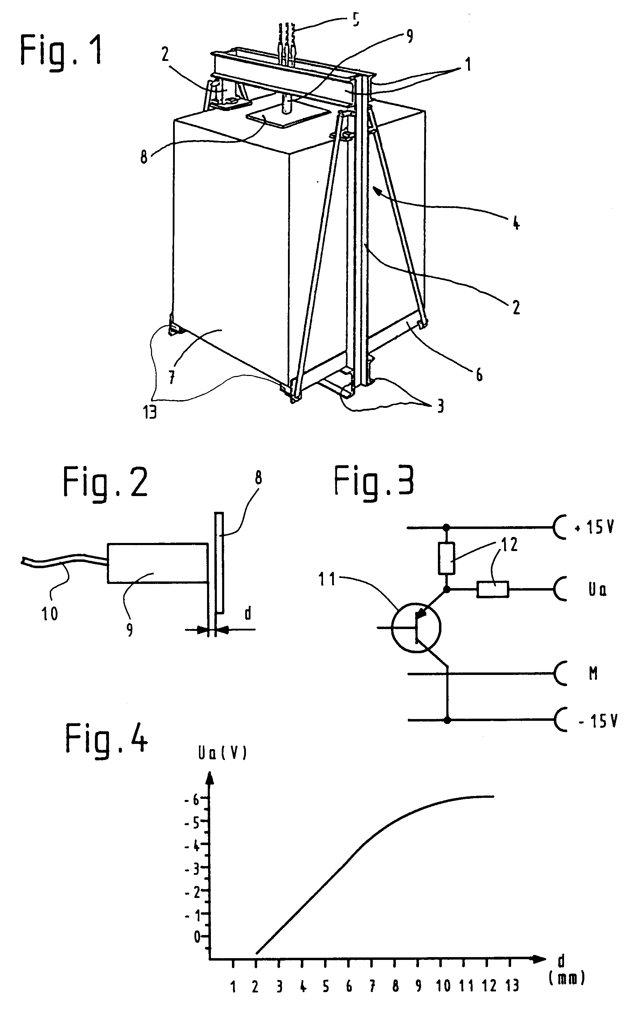

In den Fig. 1 bis 4 ist mit 1 ein oberes Joch bezeichnet, das mit vertikal verlaufenden Trägern 2 und mit einem unteren Joch 3 einen Tragrahmen 4 bildet, der an Tragseilen 5 aufgehängt ist und in einem nicht dargestellten Aufzugsschacht entlang von nicht dargestellten Führungsschienen verfahren wird. Ein auf dem unteren Joch 3 aufliegender Bodenrahmen 6 trägt eine für den vertikalen Personen- und Gütertransport vorgesehene auf Federelementen 13 gelagerte Aufzugskabine 7. Auf dem Kabinendach ist eine zur Lastmesseinrichtung gehörende Referenzplatte 8 mittig angeordnet. Ein am oberen Joch 1 mittig angeordneter Näherungssensor 9 weist bei leerer Aufzugskabine 7 gegenüber der Referenzplatte 8 einen Frontalabstand d auf, der sich im Lastfall abhängig von der Elastizität der Federelemente 13 vergrössert. Der Näherungssensor 9 erzeugt dabei ein vom Frontalabstand d abhängiges elektrisches Signal.

Im vorliegenden Ausführungsbeispiel ist ein handelsüblicher induktiver Näherungssensor 9 mit der Handelsbezeichnung EFECTOR IA-4010-DNOG/IA5034 vorgesehen. Dementsprechend muss die Referenzplatte 8 aus Stahlblech sein. Die in einem Anschlusskabel 10 geführten Leiter mit der Bezeichnung + 15 V, - 15 V und M sind für die Spannungsversorgung des Näherungssensors 9 vorgesehen und ein mit Ua bezeichneter Leiter führt die vom Frontalabstand d abhängige analoge Ausgangsspannung, die von einer als Impedanzwandler wirkenden Ausgangsstufe, bestehend aus einem Transistor 11 in Kollektorschaltung und Widerständen 12, erzeugt wird und die in Fig. 4 in Funktion des Frontalabstandes d dargestellt ist.

In einer weiteren Ausführungsvariante ist ein handelsüblicher kapazitiver Näherungsschalter vorgesehen.

## Claims

1. Load-measuring equipment for a lift cage (7), which is borne on spring elements (13) and carried by a carrying frame (4), which is suspended at carrying cables (5) and consists of a lower yoke (3) carrying a base frame (6), of vertically extending carriers (2) and of an upper yoke (1) standing in connection with the carrying cables (5), characterised thereby, that a proximity sensor (9), which when the lift cage (7) is empty displays a frontal spacing (d), which in the case of a load increases in dependence on the elasticity of the spring elements (13), relative to a reference plate (8) arranged on the cage roof, is arranged at the upper yoke (1), wherein the proximity sensor (9) at one conductor (Ua) carries an output voltage dependent on the frontal spacing (d).

2. Load-measuring equipment according to claim 1, characterised thereby, that a commercially available inductive frontal spacing (d) and a reference plate (8) of steel plate are provided.

3. Load-measuring equipment according to claim 1, characterised thereby, that a commercially available capacitive proximity sensor (9) is provided.

4. Load-measuring equipment according to claim 1, characterised thereby, that the conductor (Ua) carries an analog output voltage.

## Patentansprüche

1. Lastmesseinrichtung für eine auf Federelementen (13) gelagerte Aufzugskabine (7), die von einem an Tragseilen (5) aufgehängten Tragrahmen (4) getragen wird, der aus einem einen Bodenrahmen (6) tragenden unteren Joch (3), aus vertikal verlaufenden Trägern (2) und aus einem mit den Tragseilen (5) in Verbindung stehenden oberen Joch (1) besteht,
dadurch gekennzeichnet,
dass am oberen Joch (1) ein Näherungssensor (9) angeordnet ist, der bei leerer Aufzugskabine (7) gegenüber einer auf dem Kabinendach angeordneten Referenzplatte (8) einen Frontalabstand (d) aufweist, der sich im Lastfall abhängig von der Elastizität der Federelemente (13) vergrössert, wobei der Näherungssensor (9) an einem Leiter (Ua) eine von dem Frontalabstand (d) abhängige Ausgangsspannung führt.

2. Lastmesseinrichtung nach Anspruch 1,
dadurch gekennzeichnet,
dass ein handelsüblicher induktiver Näherungssensor (9) und eine Referenzplatte (8) aus Stahlblech vorgesehen ist.

3. Lastmesseinrichtung nach Anspruch 1,
dadurch gekennzeichnet,
dass ein handelsüblicher kapazitiver Näherungssensor (9) vorgesehen ist.

4. Lastmesseinrichtung nach Anspruch 1,
dadurch gekennzeichnet,
dass der Leiter (Ua) eine analoge Ausgangsspannung führt.

## Revendications

1. Dispositif de mesure de charge pour une cabine d'ascenseur (7) montée sur des éléments faisant ressort (13) et portée par un châssis porteur (4), suspendu à des câbles porteurs (5), qui se compose d'une armature inférieure (3) portant un châssis inférieur (6), de supports (2) s'étendant à la verticale et d'une armature supérieure (1) reliée aux câbles porteurs (5),
caractérisé en ce qu'il est prévu, sur l'armature supérieure (1), un détecteur de proximité (9) qui, lorsque la cabine d'ascenseur (7) est vide, présente par rapport à une plaque de référence (8) disposée sur le toit de la cabine un écartement frontal (d) qui augmente en cas de charge en fonction de l'élasticité des éléments faisant ressort (13), le détecteur de proximité (9) étant parcouru au niveau d'un conducteur (Ua) par une tension de sortie qui est fonction de l'écartement frontal (d).

2. Dispositif de mesure de charge selon la revendication 1, caractérisé en ce qu'un détecteur de proximité inductif (9) du commerce et une plaque de référence (8) en tôle d'acier sont prévus.

3. Dispositif de mesure de charge selon la revendication 1, caractérisé en ce qu'un détecteur de proximité capacitif (9) du commerce est prévu.

4. Dispositif de mesure de charge selon la revendication 1, caractérisé en ce que le conducteur (Ua) est parcouru par une tension de sortie analogique.
